(19) Europäisches Patentamt / European Patent Office / Office européen des brevets

(11) **EP 3 361 119 B1**

(12) **EUROPEAN PATENT SPECIFICATION**

(45) Date of publication and mention
of the grant of the patent:
**29.04.2020  Bulletin 2020/18**

(51) Int Cl.:
*F16F 9/06* *(2006.01)*          *B64C 25/60* *(2006.01)*

(21) Application number: **18160534.6**

(22) Date of filing: **14.08.2015**

(54) **SINGLE-STAGE, SEPARATED GAS-FLUID SHOCK ABSORBER SERVICING**

WARTUNG EINES EINSTUFIGEN STOSSDÄMPFERS MIT GETRENNTEM GAS-FLUID

ENTRETIEN D'UN AMORTISSEUR À GAZ-LIQUIDE SÉPARÉ À UN ÉTAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **19.08.2014   US 201414463323**

(43) Date of publication of application:
**15.08.2018   Bulletin 2018/33**

(62) Document number(s) of the earlier application(s) in
accordance with Art. 76 EPC:
**15181059.5 / 3 006 769**

(73) Proprietor: **Goodrich Corporation**
**Charlotte, NC 28217-4578 (US)**

(72) Inventors:
• **Fazeli, Amir**
  **Mississauga, Ontario L5M 6S6 (CA)**
• **Cepic, Adnan**
  **Mississaugua Ontario L5M 3K8 (CA)**
• **Reber, Susanne**
  **Strongsville, OH 44149 (US)**

(74) Representative: **Dehns**
**St. Bride's House**
**10 Salisbury Square**
**London EC4Y 8JD (GB)**

(56) References cited:
**GB-A- 2 170 294          US-A- 5 148 896
US-A1- 2008 163 668     US-A1- 2014 046 533**

**Description**

**FIELD**

The present disclosure relates generally to shock strut assemblies and, more specifically, to systems and methods for servicing shock struts.

**BACKGROUND**

Conventionally, various types of aircraft utilize shock strut assemblies to assist in reducing and managing energy transmitted from landing gear to the structure of an aircraft to which the landing gear is attached. Such shock strut assemblies often utilize a separated gas-fluid shock strut. Typically, servicing of these shock struts starts by adjusting the oil volume to a desired level. This is achieved by servicing the shock strut in the fully compressed position wherein the shock strut internal volume is known or using stroke measurement devices to set the shock strut internal volume to a known value. Then the gas chamber is pressurized to a desired gas operating pressure. Such methods typically comprise an air bleeding procedure during oil servicing to ensure that the shock strut is serviced with a right volume of oil. Moreover, gas is normally serviced at a relatively high pressure. Methods for servicing shock struts that do not require air bleeding and high gas servicing pressure may be desirable to reduce the complexity of the servicing task and associated equipment. US 5148896 describes a high pressure hydro pneumatic shock absorber.

**SUMMARY**

A method for servicing of a shock strut is defined in claim 1 and comprises providing a shock strut comprising a cylinder, a piston, and a sealed fluid chamber wherein the sealed fluid chamber comprises a gas portion and a liquid portion, pressurizing the gas portion to a first servicing gas pressure, and pressurizing the liquid portion until a second servicing gas pressure is achieved in the gas portion. The step of determining the second servicing gas pressure comprises utilizing the equations:

$$P_{gas,servicing,2} = P_{gas,nom} \times \frac{T_{gas,servicing}}{T_{nom}} \times \frac{V_{tot} - V_{oil,nom}}{V_{tot} - A_p S - V_{oil@T_{gas,servicing}\&P_{gas,servicing,2}}}$$

and

$$V_{oil@T_{gas,servicing}\&P_{gas,servicing,2}} = V_{oil,nom} \times \left(1 + a\left(T_{gas,servicing} - T_{nom}\right)\right) \times \left(1 - \frac{P_{gas,servicing,2} - P_{gas,nom}}{B}\right),$$

wherein Tnom is the nominal servicing temperature, T(gas,servicing) is the ambient temperature at which servicing is performed, V(oil,nom) is the nominal oil volume at Tnom, Vtot is the volume of sealed fluid chamber 110, Pgas,nom is the nominal pressure of the gas at Tnom, V(oil@Tgas,servicing&Pgas,servicing2) is the volume of oil at T(gas,servicing) and P(gas,servicing2), $\alpha$ is the thermal expansion coefficient of the oil, and B is the oil bulk modulus. The first servicing gas pressure may be less than the second servicing gas pressure. The gas of gas portion may comprise nitrogen. The liquid of liquid portion may comprise an oil. The liquid portion may comprise a liquid valve, and the step of pressuring the liquid portion may comprise pumping oil into the sealed fluid chamber. Similarly, the gas portion may comprise a gas valve, and the step of pressuring the gas portion to the first servicing gas pressure may comprise pressurizing the gas portion through the gas valve.

**BRIEF DESCRIPTION OF THE DRAWINGS**

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.

Figures 1A and 1B illustrate, respectively, cross sectional views of a shock strut in accordance with the present disclosure;

Figure 2 illustrates a method for servicing a shock strut in accordance with the present disclosure; and

Figure 3 illustrates a graphical depiction of various first servicing gas pressures and second servicing gas pressures at various temperatures in accordance with the present disclosure.

## DETAILED DESCRIPTION

The detailed description of exemplary embodiments herein makes reference to the accompanying drawings, which show exemplary embodiments by way of illustration and their best mode. While these exemplary embodiments are described in sufficient detail to enable those skilled in the art to practice the inventions, it should be understood that other embodiments may be realized and that logical and mechanical changes may be made without departing from the scope of the inventions. Thus, the detailed description herein is presented for purposes of illustration only and not for limitation. For example, any reference to singular includes plural embodiments, and any reference to more than one component or step may include a singular embodiment or step. Also, any reference to attached, fixed, connected or the like may include permanent, removable, temporary, partial, full and/or any other possible attachment option.

In various embodiments of the present disclosure, service is provided to a shock strut to ensure desired and predetermined performance of the shock strut. Although this disclosure may apply to both a separated gas-fluid shock strut and an actuator, for the sake of conciseness and consistency, reference will be made hereafter to a shock strut. In contrast to conventional shock strut servicing methods, the present disclosure describes methods for servicing that pressurize the gas portion of the strut to an initial pressure, and then pressurize the liquid portion until a second, higher pressure is achieved in the gas portion.

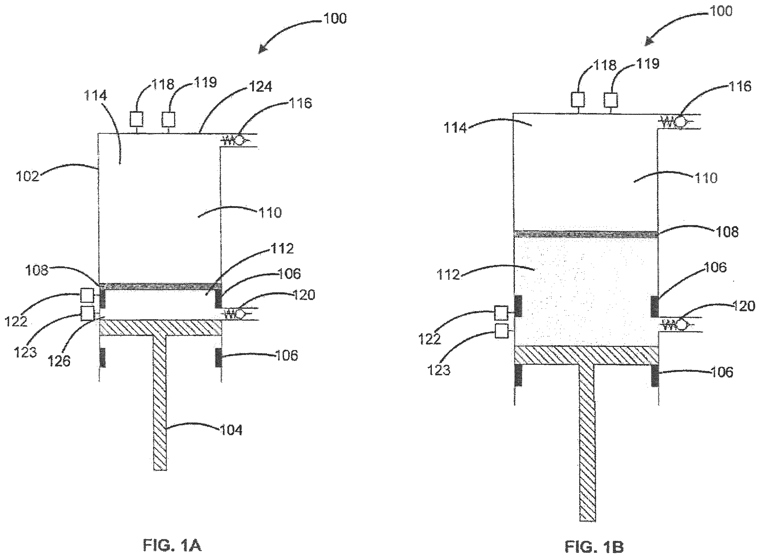

Accordingly, with reference to Figures 1A and 1B, a shock strut 100 is illustrated. In various embodiments, shock strut 100 comprises a cylinder 102 and a piston 104. Cylinder 102 may be configured to receive piston 104 in a manner that allows the two components to telescope together and absorb and/or dampen forces transmitted by a wheel assembly (not pictured). Further, cylinder 102 may comprise one or more mechanical stops 106. In various embodiments, mechanical stops 106 limit the position to which piston 104 may travel in the upward or downward directions within cylinder 102.

Cylinder 102 and piston 104 may, for example, comprise a sealed fluid chamber 110. In various embodiments, sealed fluid chamber 110 is configured such that fluid contained within it is unable to leak as piston 104 moves relative to cylinder 102.

In various embodiments, sealed fluid chamber 110 comprises a liquid portion 112. Liquid portion 112 may comprise a hydraulic fluid or oil.

Further, sealed fluid chamber 110 may further comprise a gas portion 114. Gas portion 114 may comprise a gas such as nitrogen. Conventionally, this arrangement is referred to as an "air-over-oil" arrangement.

Gas portion 114 and liquid portion 112 may, for example, be separated by a floating piston 108. In various embodiments, floating piston 108 is disposed and can freely travel within cylinder 102. For example, floating piston 108 may travel between the top of cylinder 102 and one or more mechanical stops 106.

Shock strut 100 may further comprise, for example, a gas valve 116. In various embodiments, gas valve 116 may be positioned near a top 124 of gas portion 114 of sealed fluid chamber 110. Shock strut 100 may further comprise a gas temperature sensor 118. In various embodiments, gas temperature sensor 118 may be located near or within gas valve 116. Shock strut 100 may further comprise a gas pressure sensor 119. Gas pressure sensor 119 may, for example, be located near or within gas valve 116. However, any positioning of gas valve 116, gas temperature sensor 118, and gas pressure sensor 119 is within the scope of the present disclosure. Alternatively, gas pressure and gas temperature may be measured manually using offline devices such as, for example, a dial gauge.

In various embodiments, shock strut 100 comprises a liquid valve 120. For example, liquid valve 120 may be positioned near the bottom 126 of liquid portion 112 of sealed fluid chamber 110. Shock strut 100 may further comprise a liquid temperature sensor 122 and/or a liquid pressure sensor 123. In various embodiments, liquid temperature sensor 122 and/or liquid pressure sensor 123 may be located near or within liquid valve 120. However, any positioning of liquid valve 120, liquid temperature sensor 122, and liquid pressure sensor 123 is within the scope of the present disclosure.

For example, the use of gas temperature sensor 118 and/or liquid temperature sensor 122, and/or offline measurement of these parameters using manual gauges, may allow for compensation of expansion or contraction of the liquid due to temperature and pressure variations during servicing by providing accurate temperature readings during the servicing procedure. Thus, servicing may, for example, be performed over a wider range of temperatures than conventional servicing methods. Moreover, temperature compensation may allow the shock strut internal fluid levels to be independent from the servicing temperature.

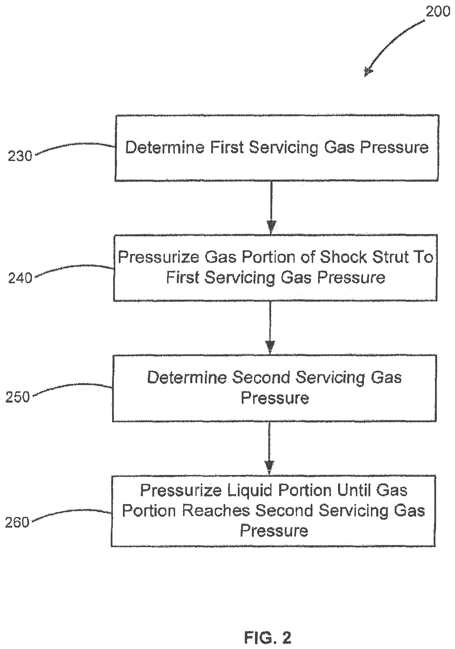

With reference to Figure 2, a method 200 for servicing a shock strut is illustrated. Method 200 may, for example, comprise a method for ensuring that a shock strut, such as shock strut 100, has predetermined volumes and pressures of gas and liquid regardless of the servicing temperature.

In various embodiments, method 200 comprises a step 230 of determining a first servicing gas pressure. For example, the first servicing gas pressure may be calculated using the following equation:

$$P_{gas,servicing,1} = P_{gas,nom} \times \frac{V_{tot} - V_{oil,nom}}{V_{gas,max}} \times \frac{T_{gas,servicing}}{T_{nom}}$$

Where P(gas,nom) is the nominal servicing pressure, Tnom is the nominal servicing temperature, T(gas,servicing) is the ambient or gas temperature at which servicing is performed, V(oil,nom) is the nominal oil volume at Tnom, Vtot is the total internal volume of sealed fluid chamber 110 and 112, and V(gas,max) is the volume available to gas when there is no oil in the shock strut and floating piston 108 is pushed to upper mechanical stop 106.

First servicing gas pressure may, for example, be significantly lower than gas pressures at which conventional servicing methods pressurize shock struts. For example, conventional methods of servicing shock struts typically pump liquid into the shock strut, then add gas to achieve a final gas pressure. In such conventional methods, the gas portion may be pressurized to more than 3,000 psi or 2.1 x10$^4$ kPa. In various embodiments of the present disclosure, the first servicing gas pressure of method 200 may be significantly less than 3,000 psi or 2.1 x10$^4$ kPa. For example, first servicing gas pressure may be less than about 2,000 psi or 1.4x10$^4$ kPa, such as, 1,990 psi or 1.37x10$^4$ kPa.

Method 200 may further comprise, for example, a step 240 of pressurizing the gas portion of the shock strut to the first servicing gas pressure. For example, gas may be added to gas portion 114 of sealed fluid chamber 110 via gas valve 116 until the first servicing gas pressure is achieved. In various embodiments, step 240 comprises pressurizing gas portion 114 to a pressure less than the shock strut operating pressure. For example, a nitrogen gas vessel at or near 3,000 psi or 2.1 x10$^4$ kPa may be used to introduce nitrogen gas into gas portion 114 to achieve first servicing gas pressure.

Method 200 may further comprise, for example, a step 250 of determining a second servicing gas pressure. For example, in a non-claimed embodiment, step 240 results in floating piston 108 being positioned at mechanical stop 106, the second servicing gas pressure may be determined by the following equations:

$$P_{gas,servicing,2} = P_{gas,nom} \times \frac{T_{gas,servicing}}{T_{nom}} \times \frac{V_{tot} - V_{oil,nom}}{V_{tot} - V_{oil@T_{gas,servicing}\&P_{gas,servicing,2}}},$$

where

$$V_{oil@T_{gas,servicing}\&P_{gas,servicing,2}} = $$
$$V_{oil,nom} \times \left(1 + \alpha\left(T_{gas,servicing} - T_{nom}\right)\right) \times \left(1 - \frac{P_{gas,servicing,2} - P_{gas,nom}}{B}\right).$$

Where Tnom is the nominal servicing temperature, T(gas,servicing) is the ambient temperature at which servicing is performed, V(oil,nom) is the nominal oil volume at Tnom, Vtot is the volume of sealed fluid chamber 110, Pgas,nom is the nominal pressure of the gas at Tnom, V(oil@Tgas,servicing&Pgas,servicing2) is the volume of oil at T(gas,servicing) and P(gas,servicing2), $\alpha$ is the thermal expansion coefficient of the oil, and *B* is the oil bulk modulus. In various embodiments, second servicing gas pressure may be higher than the first servicing pressure and the pressure of the gas vessel used to achieve the first servicing setpoint.

In further embodiments, step 250 may comprise determining the second servicing gas pressure when the piston 104 is not positioned at mechanical stop 106 (in other words, when shock strut 100 is not fully extended) using the following equations:

$$P_{gas,servicing,2} = $$
$$P_{gas,nom} \times \frac{T_{gas,servicing}}{T_{nom}} \times \frac{V_{tot} - V_{oil,nom}}{V_{tot} - A_p S - V_{oil@T_{gas,servicing}\&P_{gas,servicing,2}}}$$

and

$$V_{oil@T_{gas,servicing}\&P_{gas,servicing,2}} =$$

$$V_{oil,nom} \times \left(1 + \alpha\left(T_{gas,servicing} - T_{nom}\right)\right) \times \left(1 - \frac{P_{gas,servicing,2} - P_{gas,nom}}{B}\right).$$

Where Ap is surface area of the piston and S is stroke of shock strut 100.

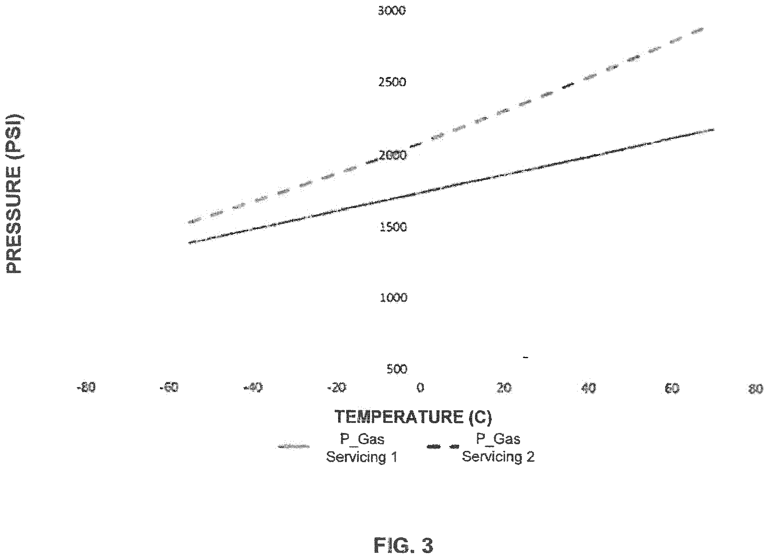

With reference to Figure 3, various first servicing gas pressures and second servicing gas pressures are illustrated at various servicing temperatures for a typical shock strut. For example, at about 40°C, the first servicing gas pressure is about 1,990 psi ($1.37 \times 10^4$ kPa) and the second servicing gas pressure is about 2,480 psi ($1.71 \times 10^4$ kPa). If such a chart is available, it may be used to graphically estimate the first servicing gas pressure and second servicing gas pressure.

In various embodiments, method 200 further comprises a step 260 of pressurizing the liquid portion until the second servicing gas pressure is achieved in the gas portion. Step 260 may comprise, for example, pressurizing liquid portion 112 of shock strut 100 via liquid valve 120 while monitoring the pressure in gas portion 114 through gas valve 116. In various embodiments, the liquid of liquid portion 112 is pressurized until the gas of gas portion 114 achieves the second servicing gas pressure calculated in step 250. Once second servicing gas pressure is achieved in gas portion 114, liquid valve 120 may be closed.

In various embodiments, oil chamber is serviced at a significantly higher pressure compared to conventional methods. At high pressures, the volume of the trapped air in the oil chamber becomes significantly smaller and, consequently, there may be no need for air bleeding.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the inventions. The scope of the inventions is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f), unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

**Claims**

1. A method for servicing a shock strut system comprising:

    providing a shock strut (100) comprising a cylinder (102), a piston (104), and a sealed fluid chamber (110), wherein the sealed fluid chamber (110) comprises a gas portion (114) and a liquid portion (112);
    determining a first servicing gas pressure;

pressurizing the gas portion (114) to the first servicing gas pressure;
determining a second servicing gas pressure; and
pressurizing the liquid portion (112) until the second servicing gas pressure is achieved in the gas portion (114), and **characterized by** the step of determining the second servicing gas pressure comprising utilizing the equations:

$$P_{gas,servicing,2} = P_{gas,nom} \times \frac{T_{gas,servicing}}{T_{nom}} \times \frac{V_{tot} - V_{oil,nom}}{V_{tot} - A_p S - V_{oil@T_{gas,servicing} \& P_{gas,servicing,2}}}$$

and

$$V_{oil@T_{gas,servicing} \& P_{gas,servicing,2}} =$$
$$V_{oil,nom} \times \left(1 + a\left(T_{gas,servicing} - T_{nom}\right)\right) \times \left(1 - \frac{P_{gas,servicing,2} - P_{gas,nom}}{B}\right),$$

wherein Tnom is the nominal servicing temperature, T(gas,servicing) is the ambient temperature at which servicing is performed, V(oil,nom) is the nominal oil volume at Tnom, Vtot is the volume of sealed fluid chamber 110, Pgas,nom is the nominal pressure of the gas at Tnom, V(oil@Tgas,servicing&Pgas,servicing2) is the volume of oil at T(gas,servicing) and P(gas,servicing2), $\alpha$ is the thermal expansion coefficient of the oil, and *B* is the oil bulk modulus, $A_p$ is the surface area of the piston (104), and S is the stroke of the shock strut (100).

2. The method of claim 1, wherein the first servicing gas pressure is less than the second servicing gas pressure.

3. The method of any of claims 1 to 2, wherein the steps of determining the first servicing gas pressure and determining the second servicing gas pressure comprise referring to at least one of a graphical illustration or a chart of servicing pressure data.

4. The method of any of claims 1 to 3, wherein the gas portion (114) comprises a gas valve (116), and the step of pressuring the gas portion (114) to the first servicing gas pressure comprises pressurizing the gas portion (114) through the gas valve (116).

5. The method of any of claims 1 to 4, wherein one of the gas portion (114) and the liquid portion (112) comprises at least one of a temperature sensor (118, 122) and a pressure sensor (119, 123).

6. The method of any of claims 1 to 5, wherein the liquid portion comprises a liquid valve (120), and the step of pressurizing the liquid portion (112) comprises pressurizing the liquid portion (112) through the liquid valve (120).

**Patentansprüche**

1. Verfahren zum Warten eines Federbeinsystems, das Folgendes umfasst:

Bereitstellen eines Federbeins (100), das einen Zylinder (102), einen Kolben (104) und eine abgedichtete Fluidkammer (110) umfasst, wobei die abgedichtete Fluidkammer (110) einen Gasabschnitt (114) und einen Flüssigkeitsabschnitt (112) umfasst;
Bestimmen eines ersten Wartungsgasdrucks;
Unterdrucksetzen des Gasabschnitts (114) bis zu dem ersten Wartungsgasdruck;
Bestimmen eines zweiten Wartungsgasdrucks; und
Unterdrucksetzen des Flüssigkeitsabschnitts (112), bis der zweite Wartungsgasdruck in dem Gasabschnitt (114) erreicht ist, und **dadurch gekennzeichnet, dass** der Schritt des Bestimmens des zweiten Wartungsgasdrucks das Nutzen der folgenden Gleichungen umfasst:

$$P_{gas,servicing,2} = P_{gas,nom} \times \frac{T_{gas,servicing}}{T_{nom}} \times \frac{V_{tot} - V_{oil,nom}}{V_{tot} - A_p S - V_{oil@T_{gas,servicing} \& P_{gas,servicing,2}}}$$

und

$$V_{oil@T_{gas,servicing}\&P_{gas,servicing,2}} =$$

$$V_{oil,nom} \times \left(1 + a\left(T_{gas,servicing} - T_{nom}\right)\right) \times \left(1 - \frac{P_{gas,servicing,2} - P_{gas,nom}}{B}\right),$$

wobei Tnom die Nenntemperatur ist, T(gas,servicing) die Umgebungstemperatur ist, bei der die Wartung durchgeführt wird, V(oil,nom) das Nennölvolumen bei Tnom ist, Vtot das Volumen der abgedichteten Fluidkammer (110) ist, Pgas,nom der Nenndruck des Gases bei Tnom ist, V(oil@Tgas,servicing&Pgas,servicing2) das Volumen von Öl bei T(gas,servicing) und P(gas,servicing2) ist, $\alpha$ der Wärmeausdehnungskoeffizient des Öls ist und $B$ das Ölmassenmodul ist, $A_p$ der Oberflächenbereich des Kolbens (104) ist und $S$ der Hub des Federbeins (100) ist.

2. Verfahren nach Anspruch 1, wobei der erste Wartungsgasdruck geringer ist als der zweite Wartungsgasdruck.

3. Verfahren nach einem der Ansprüche 1 bis 2, wobei die Schritte des Bestimmens des ersten Wartungsgasdrucks und des Bestimmens des zweiten Wartungsgasdrucks das Bezugnehmen auf mindestens eines von einer grafischen Darstellung oder einem Diagramm von Wartungsdruckdaten umfassen.

4. Verfahren nach einem der Ansprüche 1 bis 3, wobei der Gasabschnitt (114) ein Gasventil (116) umfasst, und wobei der Schritt des Unterdrucksetzens des Gasabschnitts (114) bis zu dem ersten Wartungsgasdruck das Unterdrucksetzen des Gasabschnitts (114) durch das Gasventil (116) umfasst.

5. Verfahren nach einem der Ansprüche 1 bis 4, wobei eines von dem Gasabschnitt (114) und dem Flüssigkeitsabschnitt (112) mindestens eines von einem Temperatursensor (118, 122) und einem Drucksensor (119, 123) umfasst.

6. Verfahren nach einem der Ansprüche 1 bis 5, wobei der Flüssigkeitsabschnitt ein Flüssigkeitsventil (120) umfasst, und wobei der Schritt des Unterdrucksetzens des Flüssigkeitsabschnitts (112) das Unterdrucksetzen des Flüssigkeitsabschnitts (112) durch das Flüssigkeitsventil (120) umfasst.

**Revendications**

1. Procédé d'entretien d'un système de jambe à amortisseur comprenant :

la fourniture d'une jambe à amortisseur (100) comprenant un cylindre (102), un piston (104) et une chambre de liquide étanche (110), dans lequel la chambre de liquide étanche (110) comprend une partie de gaz (114) et une partie de liquide (112) ;
la détermination d'une première pression de gaz d'entretien ;
la pressurisation de la partie de gaz (114) à la première pression de gaz d'entretien ;
la détermination d'une seconde pression de gaz d'entretien ; et
la pressurisation de la partie de liquide (112) jusqu'à ce que la seconde pression de gaz d'entretien soit atteinte dans la partie de gaz (114), et **caractérisé par** l'étape de détermination de la seconde pression de gaz d'entretien comprenant l'utilisation des équations :

$$P_{gas,servicing,2} = P_{gas,nom} \times \frac{T_{gas,servicing}}{T_{nom}} \times \frac{V_{tot} - V_{oil,nom}}{V_{tot} - A_p S - V_{oil@T_{gas,servicing}\&P_{gas,servicing,2}}}$$

et

$$V_{oil@T_{gas,servicing}\&P_{gas,servicing,2}} =$$

$$V_{oil,nom} \times \left(1 + a\left(T_{gas,servicing} - T_{nom}\right)\right) \times \left(1 - \frac{P_{gas,servicing,2} - P_{gas,nom}}{B}\right),$$

dans lesquelles Tnom est la température d'entretien nominale, T(gas,servicing) est la température ambiante à laquelle l'entretien est réalisé, V(oil,nom) est le volume d'huile nominal à Tnom, Vtot est le volume de la chambre de liquide étanche 110, Pgas,nom est la pression nominale du gaz à Tnom, V(oil@Tgas,servicing&Pgas,servicing2) est le volume d'huile à T(gas,servicing) et P(gas,servicing2), $\alpha$ est le coefficient de dilatation thermique de l'huile, et $B$ est le module de compression d'huile, $A_p$ est la surface du piston (104) et S représente la course de la jambe à amortisseur (100).

2. Procédé selon la revendication 1, dans lequel la première pression de gaz d'entretien est inférieure à la seconde pression de gaz d'entretien.

3. Procédé selon l'une quelconque des revendications 1 à 2, dans lequel les étapes de détermination de la première pression de gaz d'entretien et de détermination de la seconde pression de gaz d'entretien comprend la référence à au moins l'un d'une illustration graphique ou d'un graphique de données de pression d'entretien.

4. Procédé selon l'une quelconque des revendications 1 à 3, dans lequel la partie de gaz (114) comprend une soupape de gaz (116), et l'étape de pressurisation de la partie de gaz (114) à la première pression de gaz d'entretien comprend la pressurisation de la partie de gaz (114) à travers la soupape de gaz (116).

5. Procédé selon l'une quelconque des revendications 1 à 4, dans lequel l'une de la partie de gaz (114) et de la partie de liquide (112) comprend au moins l'un d'un capteur de température (118, 122) et d'un capteur de pression (119, 123).

6. Procédé selon l'une quelconque des revendications 1 à 5, dans lequel la partie de liquide comprend une soupape de liquide (120), et l'étape de pressurisation de la partie de liquide (112) comprend la pressurisation de la partie de liquide (112) à travers la soupape de liquide (120).

FIG. 1B

FIG. 1A

200

230 — Determine First Servicing Gas Pressure

240 — Pressurize Gas Portion of Shock Strut To First Servicing Gas Pressure

250 — Determine Second Servicing Gas Pressure

260 — Pressurize Liquid Portion Until Gas Portion Reaches Second Servicing Gas Pressure

FIG. 2

FIG. 3

TEMPERATURE (C)

PRESSURE (PSI)

— P_Gas Servicing 1

■ ■ P_Gas Servicing 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5148896 A